# EUROPÄISCHE PATENTSCHRIFT

(11) **EP 1 305 905 B1**
(45) Veröffentlichungstag und Bekanntmachung des Hinweises auf die Patenterteilung: **22.09.2004**
(21) Anmeldenummer: 01956344.4
(22) Anmeldetag: 19.07.2001
(51) Int. Cl.: H04L 1/00

(54) **VERFAHREN ZUR FEHLERKORREKTUR BEI EINER PAKETORIENTIERTEN DATENÜBERTRAGUNG**
METHOD FOR CORRECTING ERRORS IN A PACKET-ORIENTED DATA TRANSMISSION
PROCEDE DE CORRECTION D'ERREURS DANS UNE TRANSMISSION DE DONNEES ORIENTEE PAQUET

(30) Priorität: 31.07.2000 DE 10037242
(43) Veröffentlichungstag der Anmeldung: 02.05.2003
(73) Patentinhaber: Siemens Aktiengesellschaft, 80333 München (DE)
(72) Erfinder: BURKERT, Frank, 80796 München (DE); LIEBL, Günther, 85356 Freising (DE); NGUYEN, Thi, Min, Ha, 82008 Unterhaching (DE); PANDEL, Jürgen, 83620 Feldkirchen-Westerham (DE)
(86) Internationale Anmeldenummer: PCT/DE2001/002733
(87) Internationale Veröffentlichungsnummer: WO 2002/011350

(56) Entgegenhaltungen:
- US-A- 5 974 106
- "An RTP Payload Format for Generic Forward Error Correction" NETWORK WORKING GROUP, [Online] XP002185476 Gefunden im Internet: <URL:ftp://ftp.isi.edu/in-notes/rfc2733.tx t> [gefunden am 2001-12-12]

## Beschreibung

Die Erfindung betrifft ein Verfahren zur Fehlerkorrektur, bei der Mechanismen zur Wiederholung von fehlerhaften Datenpaketen, wegen der damit verbundenen zu großen Übertragungsverzögerungen, nicht möglich sind.

Bei der paketorientierten Übertragung von Daten kommt es im Allgemeinen bei Festnetzen wegen einer Überlast an Netzknoten und bei mobilen Kanälen durch atmosphärische Störungen und Mehrwegeausbreitungen zu Bitfehlern, die durch fehlererkennende Codes detektiert werden und zum Verwerfen von ganzen Paketen führen. Sogenannte Reliable Transport Protocols wie TCP verwenden Wiederholmechanismen (Automatic Repeat Request-Verfahren) um verloren gegangene oder verworfene Pakete trotz gestörter Kanäle sicher zum Empfänger transportieren zu können. Dies ist jedoch mit einem sehr erheblichen Zuwachs an Übertragungsverzögerung (Delay) verbunden, das aber, insbesondere bei Kommunikationsanwendungen, nicht toleriert werden kann. Hier kommen deshalb Unreliable Transport Protocols, zum Beispiel UDP, zum Einsatz. Diese verursachen zwar keinen Zuwachs an Übertragungsverzögerung, bieten dafür aber auch keinerlei Mechanismen Paketverluste auszugleichen. In der Audio Visual Transport Group (AVT) der IETF gibt es seit einiger Zeit deshalb intensive Bestrebungen, Verfahren zur Vorwärtsfehlerkorrektur (FEC) und paketorientierten Übertragung mit Unreliable Transport Protocols zu verbinden. Hierbei werden beispielsweise mehrere Datenpakete in einem Schritt codiert und die daraus resultierenden z Codeworte cwᵢ, mit 0≤i<z, der Länge N in einem Speicherfeld derart angeordnet, dass die Codeworte die Zeilen oder Spalten einer zxN bzw. Nxz Matrix bilden. Daraufhin werden Spalten bzw. Zeilen auf Pakete eines Transport Layers, zum Beispiel RTP/UDP, abgebildet und übertragen. Um eine quellenadaptive Codierung zu erzielen können die Codeworte cwᵢ einer Matrix einen unterschiedlichen Schutz gegen Fehler bzw. Auslöschungen aufweisen.

Wird im Folgenden die Korrekturfähigkeit eines Codewortes cwᵢ mit epᵢ bezeichnet, dann beschreibt ein sogenanntes Fehlerschutzprofil EPP die Korrekturfähigkeit der Menge der Codeworte, die in einer Matrix EPP={ep₀, ep₁, ... ep_{z-1}} zusammengefasst sind. Das Fehlerschutzprofil zweier aufeinander folgender Matrizen oder Übertragungsblöcke kann unterschiedlich sein, sei es um den Fehlerschutz an die Quelle oder auch an den Kanal anzupassen. Um aber am Empfänger die Codeworte eines Übertragungsblocks decodieren zu können, muss dem Decoder das entsprechende Fehlerschutzprofil bekannt sein bzw. übertragen werden. Dies setzt eine zuverlässige Signalisierung voraus. Diese sollte effizient sein, um den zusätzlichen Overhead so gering wie möglich zu halten. Im Header eines jeden Übertragungspakets hierfür eine genügend große Anzahl von Feldern zu übertragen, wäre sehr ineffizient und eine Übertragung außerhalb des logischen Kanals (out-of-band signaling) bedeutet einen zusätzlichen Aufwand.

Das Dokument "An RTP Payload Format for Generic Forward Error Correction"; Network Working Group; Request for Comments 2733 (URL: ftp://ftp.isi.edu/in-notes/rfc2733.txt) beschreibt ein Format für die Nutzlast eines FEC-Fehlerschutzes für Mediendaten, die mittels des RTP-Protokolls übertragen werden.

Die der Erfindung zugrunde liegende Aufgabe besteht nun darin, ein Verfahren zur Fehlerkorrektur einer paketorientierten Übertragung anzugeben, die hinsichtlich der hierfür erforderlichen Signalisierung möglichst zuverlässig und effizient ist.

Diese Aufgabe wird erfindungsgemäß durch die Merkmale des Patentanspruchs 1 gelöst. Vorteilhafte Weiterbildungen der Erfindung ergeben sich aus den weiteren Ansprüchen.

Die Erfindung beruht im Wesentlichen darauf, dass Deskriptoren verwendet werden, die Codeworte eines Übertragungsblocks gleicher Korrekturfähigkeit in einer Untermenge zusammenfassen und die Größe der Untermenge sowie den Unterschied in der Korrekturfähigkeit der zuvor angegangenen Untermenge beschreiben (differentielle Beschreibung).

Die Erfindung wird nachfolgend anhand von Ausführungsbeispielen näher erläutert.

Allen Ausführungsbeispielen gemeinsam ist die Erstellung mindestens eines Deskriptors DP = (n, ep), wobei DP eine Untermenge von n im Übertragungsblock unmittelbar aufeinanderfolgenden Codeworten mit gleichem Fehlerschutz bezeichnet. Das Argument ep stellt eine Beziehung zwischen dem Fehlerschutz der Codeworte dieser Untermenge und dem Fehlerschutz der Codeworte der unmittelbar vorangegangenen Untermenge von Codeworten her. Sind sowohl die Größe als auch der Fehlerschutz der ersten Untermenge bekannt, zum Beispiel durch out-of-band signaling beim Verbindungsaufbau, kann aus den Deskriptoren empfängerseitig das Fehlerschutzprofil EPP des Übertragungsblocks bestimmt werden. Dazu ist es aber notwendig, dass die Deskriptoren auch im Falle von Paketverlusten und Fehlern bei der Übertragung im Empfänger sicher rekonstruiert werden können. Deshalb werden die Deskriptoren vorteilhafterweise auf die ersten Codeworte des Übertragungsblocks abgebildet, wobei zumindest der Fehlerschutz des ersten Codewortes dabei vorbestimmt sein muss. Bei der Decodierung kann ein Übergang von Deskriptoren zu Daten entweder mittels eines speziellen Startcodes signalisiert oder, bei bekannter Größe des Übertragungsblocks, auch berechnet werden, da ja die Zahl z der Codeworte insgesamt bekannt ist. Bei diesem speziellen Startcode kann es sich zum Beispiel um einen reservierten Deskriptor handeln. Ein empfangsseitiger Decoder decodiert das erste Codewort cw₀ eines Übertragungsblocks und setzt ep₀ zu epₘₐₓ, wobei die maximale Korrekturfähigkeit epₘₐₓ bekannt ist, da sie beispielsweise beim Verbindungsaufbau übermittelt wurde. Damit erhält der Decoder Kenntnis über die ersten Deskriptoren und kann das zweite Codewort decodieren, da aus dem ersten decodierten Deskriptor und epₘₐₓ die Korrekturfähigkeit ep₁ bestimmt werden kann. Für die Struktur, das heißt die Abbildung von n und ep auf den Deskriptor DP, der Deskriptoren gibt es eine Vielzahl von Realisierungsmöglichkeiten. Einige von ihnen werden im Folgenden anhand von sechs Beispielen dargestellt, wobei die für den Fehlerschutz verwendeten Codes über dem Galois-Feld GF (2⁸) definiert bzw. Byte-orientiert sind, wobei die Länge der z Codewortes N sei und die Codeworte die Zeilen einer Matrix bzw. eines Übertragungsblocks bilden und wobei die Übertragungspakete aus den Spalten des Übertragungsblocks gebildet werden.

### Beispiel 1:

Das Fehlerschutzprofil EPP des Übertragungsblocks lautet wie folgt:
EPP={14,7,7,7,7,4,4,4,4,4,4,4,4,4,4,3,3,3,3,6,6,6,6,6,6,0,0,0 ,0,0,0,0}, das heißt z=32.
Die Deskriptoren bestehen jeweils aus einem Byte. Die Informationen N und ep werden jeweils mit 4 Bit codiert, wobei N vom Typ vorzeichenlos (unsigned) und ep vom Typ vorzeichenbehaftet (signed) ist. Wie aus dem Fehlerschutzprofil EPP hervorgeht, besteht die erste Untermenge von Codeworten aus vier Codeworten, die eine Korrekturfähigkeit von 7 haben, die damit um 7 kleiner ist als ep₀ = epₘₐₓ = 14. Deshalb lautet der erste Deskriptor DP = 0x4F, da hier N das linke und die Differenz der Korrekturfähigkeiten ep das rechte Halb-Byte darstellen, wobei das zweite Halb-Byte F signed hexadezimal -7 also ep=14-7=7 bedeutet. Die nächste Untermenge besteht aus zehn Codewörtern mit der Korrekturfähigkeit 4, womit der zweite Deskriptor DP = 0xAB lautet, da A unsigned hexadezimal N=10 und B signed hexadezimal -3 also ep=7-3=4 bedeuten. Der dritte Deskriptor lautet DP = 0x49 und die letzten beiden Deskriptoren sind DP = 0x63 und DP = 0x7E. Da z bekannt ist, weist der Decoder, wo der Übergang von Deskriptoren zu Daten im decodierten Codewort ist. Angenommen z ist nicht bekannt, kann der Übergang durch den Startcode SC = 0x00 signalisiert werden, da SC kein gültiger Deskriptor ist.

### Beispiel 2:

Wenn bei der in Beispiel 1 gegebenen Struktur der Deskriptoren der Unterschied zwischen der Korrekturfähigkeit zweier Untermengen größer als 7 ist, dann ist es von Vorteil die Signalisierung des Übergangs mit zwei Deskriptoren zu bewirken. Sei das Fehlerschutzprofil EPP={17,5,5}, dann ist der erste Deskriptor DP = 0x0F. Da das erste Halb-Byte 0 ist, weiß der Decoder, dass der Sprung in der Korrekturfähigkeit größer als 7 ist. Die Größe der nächsten Untermenge wird im darauffolgenden Deskriptor signalisiert, der DP = 0x2D lautet. Damit ist der Sprung in der Korrekturfähigkeit als - 12 signalisiert (ep=17-7-5=5). Ein ähnliches Verfahren kann angewendet werden, wenn die Größe der Untermenge 15 übersteigt.

### Beispiel 3:

In diesem Beispiel soll der Fall betrachtet werden, dass sowohl der Sprung in der Korrekturfähigkeit als auch die Größe der Untermenge den mit einem Halb-Byte maximal darstellbaren Wert übersteigt, wie zum Beispiel bei dem Fehlerschutzprofil EPP={14,4,4,4,4,4,4,4,4,4,4,4,4,4,4,4,4,4,4,4,4}. Wie im Beispiel 2 lautet der erste Deskriptor 0x0F. Der zweite Deskriptor DP ist 0xFB, sagt aus, dass die Untermenge 15 Codeworte umfasst und die Korrekturfähigkeit gegenüber der vorangegangenen Untermenge um 10 abgenommen hat. Da aber diese Untermenge, wie aus dem Fehlerschutzprofil EPP hervorgeht, 20 Codeworte umfasst, lautet der nächste Deskriptor 0x50, was fünf weitere Codeworte mit unveränderter Korrekturfähigkeit bedeutet. Treten diese Fälle aus Beispiel 2 und Beispiel 3 häufig auf, ist es jedoch vorteilhaft, den jeweiligen Deskriptor selbst mit zwei oder mehr Bytes darzustellen.

### Beispiel 4:

Wenn die Codeworte derart angeordnet sind, dass epᵢ < epj, i<j, dann kann auch das zweite Halb-Byte vom Typ unsigned sein. Beim Fehlerschutzprofil EPP = {14,10,10,0,0,0} ergäbe dies dann die beiden Deskriptoren DP = 0x24 DP = 0x3A.

### Beispiel 5:

Hat das Fehlerschutzprofil EPP eine Form wie EPP = {14,13,13,12,12,11,11, ... 2,2,1,1,0,0,0,0,0,0}, dann reicht ein Deskriptor der Form DP = 0x21 aus, der aussagt, dass eine Untermenge immer aus 2 Codeworten besteht und die Korrekturfähigkeit zwischen zwei aufeinanderfolgenden Untermengen immer um 1 abnimmt.

### Beispiel 6:

Sieht ein Fehlerschutzprofil EPP = {14,13,13,13,13,13,13,13,13,7,7,7,6,6,6,5,5,5,4,4,4,3,3,3,2,2 ,2,1,1,1,0,0,0,0,0,0,0} oder ähnlich aus, so kann eine effiziente Signalisierung so aussehen, dass zunächst ein Deskriptor wie aus Beispiel 1, hier zum Beispiel DP = 0xDE, gefolgt von einem Deskriptoren aus Beispiel 4, hier zum Beispiel DP = 0x31, zur Signalisierung verwendet werden.

Allgemein sind beliebige Kombinationen von Deskriptoren möglich. Der Wechsel der Struktur der Deskriptoren kann an vorgegebenen Grenzen erfolgen oder durch bestimmte Codes, z. B. 0x00, signalisiert werden.

## Patentansprüche

1. Verfahren zur Fehlerkorrektur bei einer paketorientierten Datenübertragung,
bei dem pro Übertragungsblock ein Fehlerschutzprofil mit den Korrekturfähigkeiten einer Menge von Codeworten im jeweiligen Übertragungsblock erstellt wird,
**dadurch gekennzeichnet, dass** pro Übertragungsblock Deskriptoren wie Untermengen von unmittelbar aufeinanderfolgenden Codeworten mit gleicher Korrekturfähigkeit derart gebildet werden, dass sie die Größe der jeweiligen Untermenge sowie jeweils den Unterschied in der Korrekturfähigkeit der zuvor angegangenen Untermenge beschreiben und
dass Deskriptoren und Daten im selben Band übertragen werden.

2. Verfahren nach Anspruch 1,
bei dem die Korrekturfähigkeit einer Untermenge auf mehrere Deskriptoren abgebildet wird.

3. Verfahren nach Anspruch 1 oder 2,
bei dem gleich große Untermengen mit jeweils gleichen Unterschieden in der Korrekturfähigkeit zur vorangegangenen Untermenge auf nur einen Deskriptor abgebildet werden.

4. Verfahren nach Anspruch 1 bis 3, bei dem die Deskriptoren innerhalb eines Übertragungsblocks abhängig vom Fehlerschutzprofil unterschiedlich gebildet werden und der Übergang zwischen den unterschiedlich gebildeten Deskriptoren entweder festgelegt ist oder durch bestimmte Codes signalisiert wird.

5. Verfahren nach einem der Ansprüche 1 bis 4,
bei dem ein Halb-Byte eines Deskriptors die Anzahl von Codeworten einer jeweiligen Untermenge und das andere Halb-Byte einen Unterschied in der Korrekturfähigkeit zur vorangegangenen Untermenge beschreibt.

6. Verfahren nach einem der Ansprüche 1 bis 5,
bei dem die Deskriptoren auf die ersten Codeworte eines Übertragungsblocks abgebildet werden.

7. Verfahren nach einem der Ansprüche 1 bis 6,
bei dem ein Übergang von Deskriptoren zu Daten aus einer bekannten Größe der Übertragungsblöcke und den Deskriptoren berechnet wird.

8. Verfahren nach einem der Ansprüche 1 bis 6,
bei dem ein Übergang von Deskriptoren zu Daten innerhalb eines Übertragungsblocks durch einen speziellen Startcode signalisiert wird.

9. Verfahren nach Anspruch 8, bei dem der spezielle Startcode ein für diesen Zweck reservierter Deskriptor ist.

## Claims

1. Method for error correction for packet-oriented data transmission,
in which an error protection profile with the correction capabilities of a set of code words is produced in the respective transmission block for each transmission block,
**characterized in that** descriptors such as subsets of immediately successive code words with the same correction capability are formed for each transmission block such that they describe the size of the respective subset and in each case the difference in the correction capability of the previously received subset, and
**in that** descriptors and data are transmitted in the same band.

2. Method according to Claim 1,
in which the correction capability of one subset is mapped onto a number of descriptors.

3. Method according to Claim 1 or 2,
in which subsets of the same size and in each case having the same differences in the correction capability as the previous subset are mapped onto only one descriptor.

4. Method according to Claims 1 to 3, in which the descriptors are formed differently within a transmission block as a function of the error protection profile, and the transition between the differently formed descriptors is either defined or is signalled by means of specific codes.

5. Method according to one of Claims 1 to 4,
in which half a byte in one descriptor describes the number of code words in a respective subset, and the other half byte describes any difference in the correction capability from the previous subset.

6. Method according to one of Claims 1 to 5,
in which the descriptors are mapped onto the first code words in a transmission block.

7. Method according to one of Claims 1 to 6,
in which a transition from descriptors to data is calculated from a known size of the transmission blocks and the descriptors.

8. Method according to one of Claims 1 to 6,
in which a transition from descriptors to data within a transmission block is signalled by means of a specific start code.

9. Method according to Claim 8, in which the specific start code is a descriptor which is reserved for this purpose.

## Revendications

1. Procédé destiné à la correction des erreurs dans une transmission orientée paquets .
dans lequel, pour chaque bloc de transmission, il est établi un profil de protection contre les erreurs avec les capacités de correction d'un ensemble de mots code dans le bloc de transmission respectif,
**caractérisé par le fait que**, pour chaque bloc de transmission, des descripteurs sont formés comme des sous-ensembles de mots code se succédant immédiatement et ayant la même capacité de correction de telle sorte qu'ils décrivent la grandeur du sous-ensemble respectif, ainsi que, dans chaque cas, la différence dans la capacité de correction du sous-ensemble précédent et
que les descripteurs et les données sont transmis dans la même bande.

2. Procédé selon la revendication 1
dans lequel la capacité de correction d'un sous-ensemble est projetée sur plusieurs descripteurs.

3. Procédé selon la revendication 1 ou 2
dans lequel des sous-ensembles de même grandeur ayant chacun les mêmes différences dans la capacité de correction par rapport au sous-ensemble précédent ne sont projetés que sur un descripteur.

4. Procédé selon la revendication 1 à 3
dans lequel les descripteurs sont formés d'une façon différente à l'intérieur d'un bloc de transmission en fonction du profil de protection contre les erreurs et la transition entre les descripteurs formés différemment est ou bien fixée ou bien signalisée par un code déterminé.

5. Procédé selon la revendication 1 à 4
dans lequel un demi-octet d'un descripteur décrit le nombre de mots code d'un sous-ensemble correspondant et l'autre demi-octet décrit une différence dans la capacité de correction par rapport au sous-ensemble précédent.

6. Procédé selon la revendication 1 à 5
dans lequel les descripteurs sont projetés sur les premiers mots code d'un bloc de transmission.

7. Procédé selon la revendication 1 à 6
dans lequel une transition entre descripteurs et données est calculée à partir d'une grandeur connue des blocs de transmission et à partir des descripteurs.

8. Procédé selon la revendication 1 à 6
dans lequel une transition entre descripteurs et données est signalisée à l'intérieur d'un bloc de transmission par un code spécial de démarrage.

9. Procédé selon la revendication 8
dans lequel le code spécial de démarrage est un descripteur réservé à cet effet.
